# EUROPÄISCHE PATENTSCHRIFT

(11) **EP 1 616 134 B1**
(45) Veröffentlichungstag und Bekanntmachung des Hinweises auf die Patenterteilung: **26.09.2012**
(21) Anmeldenummer: 04726845.3
(22) Anmeldetag: 10.04.2004
(51) Int. Cl.: F24H 9/20, B60H 1/22, F23N 5/02, F23N 5/24

(54) **LUFTHEIZGERÄT MIT EINER VORRICHTUNG ZUR FLAMMÜBERWACHUNG**
AIR HEATING APPARATUS COMPRISING A FLAME MONITORING DEVICE
APPAREIL DE CHAUFFAGE D'AIR COMPRENANT UN DISPOSITIF DE SURVEILLANCE DE FLAMME

(30) Priorität: 09.04.2003 DE 10316194
(43) Veröffentlichungstag der Anmeldung: 18.01.2006
(73) Patentinhaber: Webasto AG, 82131 Stockdorf (DE)
(72) Erfinder: PÖHNER, Michael, 80802 München (DE); BREHMER, Martin, 17039 Woggersin (DE); DAMNITZ, Andreas, 17039 Neuenkirchen /OT Ihlenfeld (DE); MALCHOW, Arno, 17235 Neustrelitz (DE)
(86) Internationale Anmeldenummer: PCT/DE2004/000754
(87) Internationale Veröffentlichungsnummer: WO 2005/052466

(56) Entgegenhaltungen:
- DE-A- 10 138 821
- US-A- 4 726 514
- US-A- 5 788 148
- US-B1- 6 540 150

## Beschreibung

### Hintergrund der Erfindung

Die Erfindung betrifft ein Luftheizgerät für ein Fahrzeug mit einem Brenner und einem daran angeordneten Wärmeübertrager, einer Vorrichtung zur Überwachung einer im Brenner brennenden Flamme, und einer Vorrichtung zum Fördern von Heizluft durch den Wärmeübertrager. Die Erfindung betrifft ferner ein Fahrzeug, das mit einem derartigen Luftheizgerät versehen ist.

Bei Fahrzeugen, wie beispielsweise Personenkraftwagen, Lastkraftwagen, Campingmobilen oder Schiffen und Flugzeugen treten heutzutage Forderungen nach Komfort und Behaglichkeit für die Insassen der Fahrzeuge immer mehr in den Vordergrund. Gleichzeitig sind die Maßstäbe, nach denen die Umweltverträglichkeit und der Schadstoffausstoß der Fahrzeuge bewertet werden, strenger geworden.

Mit einem Luftheizgerät kann der Komfort in einem Fahrzeug insbesondere während kalter Tage und Nächte im Herbst, Winter und Frühjahr erheblich verbessert werden. Mit dem Luftheizgerät wird beispielsweise aus der Umgebung des Fahrzeugs Luft angesaugt, die dann als Heizluft durch das Luftheizgerät erwärmt und nachfolgend einem Innenraum des Fahrzeugs zugeführt wird.

Aus DE 197 35 079 A1 ist ein brennstoffbetriebenes Heizgerät, insbesondere motorunabhängig betriebenes Luftheizgerät für Kraftfahrzeuge bekannt, bei dem ein Flammenerkennungsfühler im Abgasweg angeordnet ist. Durch einen Boden- bzw. Kalottentemperaturfühler und den Abgastemperaturfühler wird die CO₂-Emission des Abgases überwacht und gegebenenfalls begrenzt.

Aus DE 101 38 821 A1 ist ein Luftheizgerät und ein Verfahren zum Ermitteln einer Heizluft-Ausblastemperatur eines Luftheizgerätes bekannt, bei denen die Heizluft-Ausblastemperatur unter Verwendung der von einem Temperatursensor gemessenen Temperatur über ein gerätespezifisches Temperaturmodell ermittelt wird.

Aus DE 197 02 339 A1 ist ein Flammwächter für ein Heizgerät bekannt, der als Glühelement im Innern des Brenners ausgebildet ist.

Aus US 4 726 514 A ist ein Fahrzeugheizgerät bekannt, bei dem ein erster Temperaturfühler am Eintritt und ein zweiter Temperaturfühler am Austritt des Heizgeräts angeordnet ist, wobei die Temperaturfühleranordnung zur Flammüberwarchung genutzt werden kann.

### Zugrundeliegende Aufgabe

Der Erfindung liegt die Aufgabe zugrunde, ein Fahrzeug mit einem Luftheizgerät zu schaffen, mit dem auf kostengünstige Weise ein sicherer Betrieb des Luftheizgerätes gewährleistet und insbesondere den gestiegenen Anforderungen an einen geringen Schadstoffausstoß entsprochen werden kann.

### Erfindungsaemäße Lösung

Diese Aufgabe ist erfindungsgemäß mit einem eingangs genannten Luftheizgerät für ein Fahrzeug gelöst, bei dem die Vorrichtung zur Flammüberwachung mit einer Einrichtung zum Messen der Temperatur von durch das Luftheizgerät strömender Heizluft gestaltet ist, die Einrichtung mit einem ersten Sensor (30) zum Messen der Temperatur von aus dem Luftheizgerät ausströmender Heizluft gestaltet ist und die Einrichtung mit einem zweiten Sensor zum Messen der Temperatur von in das Luflheizgerät einströmender Heizluft gestaltet ist, wobei
die Einrichtung (18, 28, 30) die Differenz der Gradienten der Temperaturen der einströmenden und der ausströmenden Heizluft auswerten kann. Die Aufgabe ist ferner mit einem Fahrzeug gelöst, das mit einem derartigen erfindungsgemäßen Luftheizgerät versehen ist.

Erfindungsgemäß werden für die Flammüberwachung bei einem Luftheizgerät nicht zusätzliche bzw. speziell dafür vorgesehene Sensoren verwendet, sondern es werden bereits vorhandene Einrichtungen genutzt, um die Flamme zu überwachen.

Dies geschieht, indem die Temperatur der durch das Luftheizgerät strömenden Heizluft gemessen und auf der Grundlage dieses Messsignals auf ein Vorhandensein und eine ordnungsgemäße Ausbildung der Flamme im Brenner des Luftheizgerätes rückgeschlossen wird. Beispielsweise werden für bestimmte Betriebszustände des Luftheizgerätes Soll-Temperaturen der Heizluft ermittelt, und diese Soll-Werte werden im eigentlichen Betrieb des Luftheizgerätes mit gemessenen Ist-Werten verglichen. Wenn dann Differenzen auftreten, ermöglicht dies einen Rückschluss auf die Qualität der Flamme.

Mit der erfindungsgemäßen Flammüberwachung kann auf einen herkömmlichen Flammwächter, beispielsweise dem aus DE 197 02 339 A1 bekannten Glühelement, verzichtet werden. Die Flammüberwachung gemäß der Erfindung kann allein durch eine entsprechende Anpassung der Software eines Steuergerätes des Luftheizgerätes realisiert werden. Der Wegfall eines Flammwächters führt zu einer erheblichen Reduzierung der Herstellungskosten des Luftheizgerätes. Zugleich ist eine sichere und störungsarme Flammüberwachung gewährleistet, so dass das Luftheizgerät sicher und ferner durch eine entsprechende Steuerung verhältnismäßig schadstoffarm betrieben werden kann.

Bei der Erfindung ist die Einrichtung zum Messen der Temperatur von durch das Luftheizgerät strömender Heizluft mit einem ersten Sensor zum Messen der Temperatur von aus dem Luftheizgerät strömender Heizluft gestaltet. Die Temperatur der ausströmenden Heizluft spiegelt bei entsprechender Auswertung die im Brenner vorliegenden Temperaturverhältnisse wieder, so dass insbesondere auf das Vorhandensein oder Nichtvorhandensein einer Flamme rückgeschlossen werden kann.

Bei bestimmten Betriebszuständen kann auf kostengünstige Weise allein der Absolutwert der Temperatur der ausströmenden Heizluft ausgewertet werden. Der Absolutwert kann ferner vorteilhaft in Kombination mit andere Größen betrachtet und entsprechend auf die Qualität der Flamme im Brenner rückgeschlossen werden.

In einem erfindungsgemäßen Luftheizgerat ist eine einfache und zugleich genaue Überwachung der Flamme möglich, indem die Einrichtung den Gradienten der Temperatur der ausströmenden Heizluft auswerten kann. So kann beispielsweise der Temperaturanstieg der Heizluft in einem bestimmten Zeitabschnitt während eines Starts des Luftheizgerätes ausgewertet und beispielsweise durch einen Vergleich mit einem Soll-Temperaturanstieg ein Flammabriss im Brenner erkannt werden.

Bei der erfindungsgemäßen Überwachung einer Flamme kann die Überwachungsgenauigkeit insbesondere dadurch verbessert werden, dass die Einrichtung mit einem zweiten Sensor zum Messen der Temperatur von in das Luftheizgerät einströmender Heizluft gestaltet ist. Mit einer solchen Anordnung können bei der Flammüberwachung auch jene Störeinflüsse berücksichtigt werden, die sich durch Änderungen in der Umgebung des Luftheizgerätes ergeben. So kann beispielsweise eine kurzfristige Änderung der Außentemperatur und eine dadurch bedingte Abkühlung der ausströmenden Heizluft erkannt werden. Darüber hinaus können mit der Überwachung der Temperatur der einströmenden Heizluft auch Einflussgrößen berücksichtigt werden, die sonst nur durch zusätzlichen Aufwand mit in die Flammüberwachung einfließen würden. Beispielsweise erwärmt sich mit dem anhaltenden Betrieb das Luftheizgerät insgesamt, was sich auch auf die durch das Luftheizgerät strömende Heizluft auswirkt. Von dem aufgeheizten Luftheizgerät wird auch bereits die einströmende Heizluft geringfügig stärker erwärmt, so dass die Auswirkung bereits durch das Messen von deren Temperatur berücksichtigt werden kann.

Um auf kostengünstige Weise eine genügend genaue Überwachung der Flamme zu gewährleisten, kann es ausreichen, wenn die Einrichtung den Absolutwert der Temperatur der einströmenden Heizluft auswerten kann.

Darüber hinaus kann die Qualität der Überwachung gesteigert werden, indem die Einrichtung den Gradienten der Temperatur der einströmenden Heizluft auswerten kann.

Um insbesondere den Einfluss von Temperaturschwankungen in der Ansaugluft und damit der zugeführten Heizluft des Luftheizgerätes weiter zu minimieren, kann die Vorrichtung zur Flammüberwachung die Differenz der Absolutwerte der Temperaturen der einströmenden und der ausströmenden Heizluft auswerten.

Aber es ist vorteilhaft, wenn die Vorrichtung zur Flammüberwachung die Differenz der Gradienten der Temperaturen der einströmenden und der ausströmenden Heizluft auswerten kann.

Damit, wie oben erläutert, eine kostengünstige Lösung geschaffen werden kann, ist es vorteilhaft, wenn als Sensor zum Messen der Temperatur von aus dem Luftheizgerät strömender Heizluft ein ohnehin vorhandener Überhitzungssensor am Wärmeübertrager des Luftheizgerätes verwendet wird.

Darüber hinaus kann vorteilhaft als Sensor zum Messen der Temperatur von in das Luftheizgerät strömender Heizluft ein Leiterplattentemperatursensor in einem Heizluft-Ansaugtrakt des Luftheizgerätes vorgesehen sein. Mit einem solchen Sensor kann ferner zugleich die Betriebstemperatur des Luftheizgerätes insgesamt und damit auch die Temperatur der in das Luftheizgerät zugeführten Brennluft bei der Steuerung der Verbrennung berücksichtigt werden.

### Kurzbeschreibung der Zeichnung

Nachfolgend wird ein Ausführungsbeispiel eines erfindungsgemäßen Luftheizgerätes anhand der beigefügten schematischen Zeichnung näher erläutert. Es zeigt:

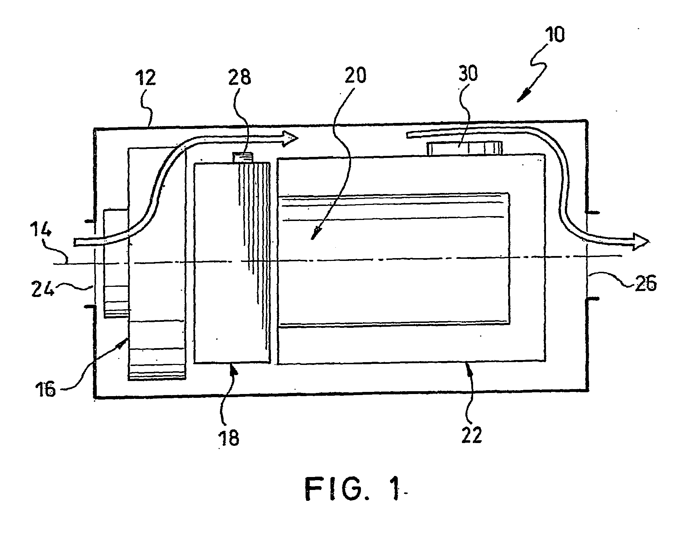

- Fig. 1: eine Seitenansicht eines erfindungsgemäßen Luftheizgerätes im Längsschnitt.

### Detaillierte Beschreibung des Ausführunctsbeispiels

In Fig. 1 ist ein Luftheizgerät 10 veranschaulicht, das sich mit einem im Wesentlichen zylindrischen Gehäuse 12 längs einer Achse 14 erstreckt.

In dem Gehäuse 12 sind bezogen auf Fig. 1 ausgehend von der linken Seite aufeinander folgend ein Heizluftgebläseläufer 16, ein Steuergerät 18 und ein Brenner 20 angeordnet. Der Brenner 20 ist von einem Wärmeübertrager 22 umgeben.

Im Betrieb des Luftheizgerätes 10 wird von dem Heizluftgebläseläufer 16 Heizluft durch das Gehäuse 12 gefördert. Die Heizluft tritt dabei an der bezogen auf Fig. 1 linken Stirnseite des Gehäuses 12 durch einen Heizlufteintritt 24 ein und an der rechten Stirnseite durch einen Heizluftaustritt 26 aus dem Gehäuse 12 aus.

Während seines Strömungsweges durch das Gehäuse 12 umströmt die eintretende Heizluft das Steuergerät 18 und wird nachfolgend an dem Wärmeübertrager 22 aufgeheizt.

An dem Steuergerät 18 ist in einem radial äußeren Randbereich ein Leiterplattentemperatursensor 28 angeordnet, mittels dem die Betriebstemperatur einer Leiterplatte des Steuergeräts und darüber hinaus auch der Absolutwert und der Gradient der Temperatur der eintretenden Heizluft ermittelt werden können. Ferner ist an dem Luftheizgerät 10 an einem radial äußeren Randbereich des Wärmeübertragers 22 ein Überhitzungssensor 30 vorgesehen, der zum einen verwendet wird, um die Gefahr einer Überhitzung des Wärmeübertragers zu erkennen, und mit dem zum anderen der Absolutwert und der Gradient der Temperatur der aus dem Luftheizgerät 10 austretenden Heizluft ermittelt werden können.

Der Leiterplattentemperatursensor 28 und der Überhitzungssensor 30 sind mit dem Steuergerät 18 durch nicht dargestellte Signalleitungen verbunden. Das Steuergerät 18 ist seinerseits mit dem Brenner 20 betrieblich gekoppelt, so dass es die Zufuhr von Brennstoff und Brennluft zu dem Brenner 20 regeln kann.

Um eine besonders kostengünstige und zugleich genaue Überwachung einer im Brenner 20 brennenden Flamme zu schaffen, ist mit dem Leiterplattentemperatursensor 28 und dem Überhitzungssensor 30 eine Vorrichtung zur Flammüberwachung gebildet. In dieser Vorrichtung wird mit den beiden Sensoren die Temperatur der durch das Luftheizgerät 10 strömender Heizluft ermittelt und das Ergebnis der Ermittlung ausgewertet.

Bei der Überwachung wird mit dem Überhitzungssensor 30 der Absolutwert und der Gradient die Temperatur der aus dem Luftheizgerät 10 ausströmender Heizluft gemessen. Ferner wird mit dem Leiterplattentemperatursensor 28 der Absolutwert und der Gradient der in das Luftheizgerät einströmender Heizluft gemessen.

Die Vorrichtung zur Flammüberwachung umfasst ferner eine nicht dargestellte Schaltung, die im Steuergerät 18 ausgebildet ist und mit der die Differenz der Absolutwerte der Temperaturen der einströmenden und der ausströmenden Heizluft ausgewertet werden. Ferner kann die Schaltung die Differenz der Gradienten der Temperaturen der einströmenden und der ausströmenden Heizluft auswerten.

Bei der Auswertung werden die ermittelten Ist-Werte mit Soll-Werten verglichen, die in Form von Tabellen in einem Speicher des Steuergeräts 18 abgelegt sind. Treten hier Abweichungen auf, so kann beispielsweise ein Flammabriss im Brenner 20 erkannt und das Luftheizgerät 10 entsprechend neu gestartet werden.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Luftheizgerät
- 12: Gehäuse
- 14: Achse
- 16: Heizluftgebläseläufer
- 18: Steuergerät
- 20: Brenner
- 22: Wärmeübertrager
- 24: Heizlufteintritt
- 26: Heizluftaustritt
- 28: Leiterplattentemperatursensor
- 30: Überhitzungssensor

## Patentansprüche

1. Luftheizgerät (10) für ein Fahrzeug mit einem Brenner (20) und einem daran angeordneten Wärmeübertrager (22), einer Vorrichtung zur Überwachung einer im Brenner (20) brennenden Flamme, und einer Vorrichtung (16) zum Fördern von Heizluft durch den Wärmeübertrager (22),
wobei die Vorrichtung zur Flammüberwachung mit einer Einrichtung (18, 28, 30) zum Messen der Temperatur von durch das Luftheizgerät (10) strömender Heizluft gestaltet ist, die Einrichtung (18, 28, 30) mit einem ersten Sensor (30) zum Messen der Temperatur von aus dem Luftheizgerät (10) ausströmender Heizluft gestaltet ist und die Einrichtung (18, 28, 30) mit einem zweiten Sensor (28) zum Messen der Temperatur von in das Luftheizgerät (12) einströmender Heizluft gestaltet ist,
**dadurch gekennzeichnet, dass**
die Einrichtung (18, 28, 30) die Differenz der Gradienten der Temperaturen der einströmenden und der ausströmenden Heizluft auswerten kann.

2. Luftheizgerät nach Anspruch 1,
**dadurch gekennzeichnet, dass** die Einrichtung (18, 28, 30) den Absolutwert der Temperatur der ausströmenden Heizluft auswerten kann.

3. Luftheizgerät nach Anspruch 1 oder 2,
**dadurch gekennzeichnet, dass** die Einrichtung (18, 28, 30) den Gradienten der Temperatur der ausströmenden Heizluft auswerten kann.

4. Luftheizgerät nach einem der vorhergehenden Ansprüche,
**dadurch gekennzeichnet, dass** die Einrichtung (18, 28, 30) den Absolutwert der Temperatur der einströmenden Heizluft auswerten kann.

5. Luftheizgerät nach einem der vorhergehenden Ansprüche,
**dadurch gekennzeichnet, dass** die Einrichtung (18, 28, 30) den Gradienten der Temperatur der einströmenden Heizluft auswerten kann.

6. Luftheizgerät nach einem der vorhergehenden Ansprüche,
**dadurch gekennzeichnet, dass** die Einrichtung (18, 28, 30) die Differenz der Absolutwerte der Temperaturen der einströmenden und der ausströmenden Heizluft auswerten kann.

7. Luftheizgerät nach einem der vorhergehenden Ansprüche,
**dadurch gekennzeichnet, dass** als Sensor zum Messen der Temperatur von aus dem Luftheizgerät (10) strömender Heizluft ein Überhitzungssensor (30) am Wärmeübertrager (22) des Luftheizgerätes (10) vorgesehen ist.

8. Luftheizgerät nach einem der vorhergehenden Ansprüche,
**dadurch gekennzeichnet, dass** als Sensor zum Messen der Temperatur von in das Luftheizgerät (10) strömender Heizluft ein Leiterplattentemperatursensor (28) in einem Heizluft-Ansaugtrakt des Luftheizgerätes (10) vorgesehen ist.

9. Fahrzeug mit einem Luftheizgerät (10) nach einem der vorhergehenden Ansprüche.

## Claims

1. Air heating apparatus (10) for a vehicle, with a burner (20) and with a heat exchanger (22) arranged thereon, with a device for monitoring a flame burning in the burner (20), and with a device (16) for conveyance of heating air through the heat exchanger (22), the device for flame monitoring being configured with an arrangement (18, 28, 30) for measuring the temperature of heating air flowing through the air heating apparatus (10), the arrangement (18, 28, 30) being configured with a first sensor (30) for measuring the temperature of heating air flowing out of the air heating apparatus (10), and the arrangement (18, 28, 30) being configured with a second sensor (28) for measuring the temperature of heating air flowing into the air heating apparatus (10), **characterized in that** the arrangement (18, 28, 30) can evaluate the difference in the gradients of the temperatures of the inflowing and the outflowing heating air.

2. Air heating apparatus according to Claim 1, **characterized in that** the arrangement (18, 28, 30) can evaluate the absolute value of the temperature of the outflowing heating air.

3. Air heating apparatus according to Claim 1 or 2, **characterized in that** the arrangement (18, 28, 30) can evaluate the gradient of the temperature of the outflowing heating air.

4. Air heating apparatus according to one of the preceding claims, **characterized in that** the arrangement (18, 28, 30) can evaluate the absolute value of the temperature of the inflowing heating air.

5. Air heating apparatus according to one of the preceding claims, **characterized in that** the arrangement (18, 28, 30) can evaluate the gradient of the temperature of the inflowing heating air.

6. Air heating apparatus according to one of the preceding claims, **characterized in that** the arrangement (18, 28, 30) can evaluate the difference in the absolute values of the temperatures of the inflowing and of the outflowing heating air.

7. Air heating apparatus according to one of the preceding claims, **characterized in that** the sensor provided for measuring the temperature of heating air flowing out of the air heating apparatus (10) is an overheating sensor (30) on the heat exchanger (22) of the air heating apparatus (10).

8. Air heating apparatus according to one of the preceding claims, **characterized in that** the sensor provided for measuring the temperature of heating air flowing into the air heating apparatus (10) is a circuit board temperature sensor (28) in a heating-air intake tract of the air heating apparatus (10).

9. Vehicle comprising an air heating apparatus (10) according to one of the preceding claims.

## Revendications

1. Appareil de chauffage d'air (10) pour un véhicule comprenant un brûleur (20) et un dispositif de transfert de chaleur (22) disposé sur celui-ci, un dispositif de surveillance d'une flamme brûlant dans le brûleur (20) et un dispositif (16) pour refouler l'air chaud à travers le dispositif de transfert de chaleur (22),
le dispositif de surveillance de flamme étant configuré avec un système (18, 28, 30) pour mesurer la température de l'air chaud affluant à travers l'appareil de chauffage d'air (10), le système (18, 28, 30) étant configuré avec un premier capteur (30) pour mesurer la température de l'air chaud sortant de l'appareil de chauffage d'air (10), et le système (18, 28, 30) étant configuré avec un deuxième capteur (28) pour mesurer la température de l'air chaud affluant dans l'appareil de chauffage d'air (12), **caractérisé en ce que**
le système (18, 28, 30) peut analyser la différence de gradients des températures de l'air chaud affluant et sortant.

2. Appareil de chauffage d'air selon la revendication 1,
**caractérisé en ce que** le système (18, 28, 30) peut analyser la valeur absolue de la température de l'air chaud sortant.

3. Appareil de chauffage d'air selon la revendication 1 ou 2,
**caractérisé en ce que** le système (18, 28, 30) peut analyser le gradient de température de l'air chaud sortant.

4. Appareil de chauffage d'air selon l'une quelconque des revendications précédentes,
**caractérisé en ce que** le système (18, 28, 30) peut analyser la valeur absolue de la température de l'air chaud affluant.

5. Appareil de chauffage d'air selon l'une quelconque des revendications précédentes,
**caractérisé en ce que** le système (18, 28, 30) peut analyser le gradient de température de l'air chaud affluant.

6. Appareil de chauffage d'air selon l'une quelconque des revendications précédentes,
**caractérisé en ce que** le système (18, 28, 30) peut analyser la différence des valeurs absolues des températures de l'air chaud affluant et sortant.

7. Appareil de chauffage d'air selon l'une quelconque des revendications précédentes,
**caractérisé en ce que** l'on prévoit comme capteur de mesure de la température de l'air chaud s'écoulant hors de l'appareil de chauffage d'air (10) un capteur de surchauffe (30) au niveau du dispositif de transfert de chaleur (22) de l'appareil de chauffage d'air (10).

8. Appareil de chauffage d'air selon l'une quelconque des revendications précédentes,
**caractérisé en ce que** l'on prévoit comme capteur de mesure de la température de l'air chaud s'écoulant dans l'appareil de chauffage d'air (10) un capteur de température à carte à circuits imprimés (28) dans une section d'admission d'air chaud de l'appareil de chauffage d'air (10).

9. Véhicule comprenant un appareil de chauffage d'air (10) selon l'une quelconque des revendications précédentes.
